# EUROPEAN PATENT SPECIFICATION

(11) **EP 1 581 063 B1**
(45) Date of publication and mention of the grant of the patent: **28.04.2010**
(21) Application number: 03786441.0
(22) Date of filing: 30.12.2003
(51) Int. Cl.: A23C 21/00, A23C 1/04

(54) **METHOD AND DEVICE FOR PRODUCING WHEY POWDER**
VERFAHREN UND VORRICHTUNG ZUR HERSTELLUNG VON MOLKENPULVER
PROCEDE ET DISPOSITIF DE PRODUCTION DE POUDRE DE LACTOSERUM

(30) Priority: 31.12.2002 NL 1022291
(43) Date of publication of application: 05.10.2005
(73) Proprietor: Tetra Laval Holdings & Finance SA, 1009 Pully (CH)
(72) Inventor: BOERSEN, Antonius, Cornelis, NL-8391 ME Noordwolde (NL); VELDMEIJER, Lucas, NL-9431 HX Westerbork (NL)
(74) Representative: Jennen, Peter Leonardus Hendricus
(86) International application number: PCT/NL2003/000948
(87) International publication number: WO 2004/057973

(56) References cited:
- EP-A- 0 716 810
- WO-A-02/087348
- US-A- 2 181 146
- US-A- 2 555 514
- US-A- 2 661 294
- US-A- 2 728 678
- US-A- 3 615 663
- US-A- 6 048 565
- US-B1- 6 335 045
- DATABASE WPI Section Ch, Week 200277 Derwent Publications Ltd., London, GB; Class D13, AN 2002-711321 XP002252793 -& RU 2 187 939 C (RUSSIAN AGRIC ACAD CHILDREN'S FOODSTUFFS), 27 August 2002 (2002-08-27)
- T. SIENKIEWICZ: "Molke und Molkeverwertung" 1986 , VEB FACHBUCHVERLAG LEIPZIG , LEIPZIG XP002252792 page 27 -page 32

## Description

The present invention relates to a method for producing whey powder, in which a whey concentrate with a dry matter content of at least 45% is crystallized before then being finely dispersed and dried to form a whey powder with the aid of a drying gas.

In the context of the present application, the term "whey" is used as a collective term to encompass a number of lactose-containing dairy products which are subject to problems of caking and/or other forms of stickiness when they are dried to form a powder in the usual way. The term is intended in particular to encompass the traditional sweet or acid whey, milk permeate and whey permeate, mother liquors of the above products as well as partially demineralized products of sweet and acid whey, milk permeates and whey permeates and mother liquors. Instances where only traditional whey is intended expressly indicate this.

Traditional whey is a by-product of cheese making or of casein preparation.

A permeate, such as whey permeate and milk permeate is a lactose-rich liquid which is obtained in particular by filtration of whey or (skimmed) milk. A characteristic feature of whey permeate is its (very) low protein content.

A mother liquor is the residual substance which remains after some of the lactose has been removed from one of the abovementioned products, for example by the lactose being crystallized out. While a lactose-containing product is being crystallized out, a mother liquor will also be present in the form of the residual liquid surrounding the crystallized lactose. This is of course what the lactose has been crystallized out of.

On account of the possible differences in origin of the whey (products), it will also be possible for the composition thereof to vary. This also applies to the derivatives thereof.

The term "whey powder" is to be understood as meaning the powders of the abovementioned whey and the like.

In the present context, the term "whey concentrate" relates to "whey" (i.e. including the permeates etc.) from which a large proportion of the water has been removed, for example using membrane techniques, such as reverse osmosis or by evaporation (for example in falling-film evaporators), combinations thereof, etc.

Typical dry matter contents (also referred to as DMC in the present application) vary considerably. In crude, i.e. unconcentrated form, whey and milk permeates and whey permeates typically have a DMC of 5 to 6%. The DMC of concentrates is of course higher, typically more than for example 30%, in particular between 50 and 65%, while the DMC of mother liquors is generally slightly lower, often between 40 and 55%. In the present application, a "high" dry matter content is to be understood as meaning a DMC of at least 45%.

A common feature of all these products is that they have a relatively high lactose content. In the case of sweet whey, this is typically between 70 and 75% of the DMC, while in the case of permeates it is typically between 82 and 86% of the DMC. Mother liquors contain significantly less lactose, but often still contain 50-55%, based on dry matter. A particular characteristic of mother liquors is a high mineral content, approximately 15-20%, compared to whey and milk permeates and whey permeates.

The term "crystallize" is to be understood as meaning at least partially "precipitating" the substances which are dissolved in the whey concentrate (in a supersaturated concentration). This applies in particular to lactose. In practice, this is often achieved by (quickly) cooling the whey concentrate, after which the supersaturation formed in the solution is eliminated by the dissolved substance at least partially coming out of solution in the form of small solid particles. In principle, these particles remain suspended in the liquid, but could if desired be removed by settling.

WO 02/087348 has disclosed a method for producing whey powders. In this method, a lactose-containing liquid with a dry matter content of up to 58% is also heated to temperatures of up to some 90°C and above before then being concentrated further in a flash evaporation process. However, on the one hand the emphasis is placed on making this heating very short, in order to prevent undesired reactions (Maillard reactions, denaturation of proteins and the like), although no actual time duration is given, and on the other hand it is also impossible for this time duration to be determined precisely, since the known method is based on the concentrate obtained during the flash evaporation step being added back to the lactose-containing liquid, preferably in percentages of 75% or more. Consequently, the actual residence time in the heating step cannot be determined.

This known method has the drawback that it only results in whey powders with moderate stickiness properties. In other words, there is a risk that particles of the whey powder obtained during the (spray-)drying process will still be sticky, and consequently there is a risk of caking and other contamination in the drying chamber, the cyclones and the like, as well as in the air passages and elsewhere. This product is dried to a moisture content of approx. 5% in a single-stage process. The outer side of the powder particles still comprises amorphous lactose and therefore remains sticky. This is a considerable drawback in particular with regard to the particles entrained with the (spray-)drying air, since these particles are not in principle subjected to any further treatment to eliminate any sticking power and therefore their soiling properties.

It is an object of the present invention to counteract the above drawback.

The invention achieves this object by a method according to claim 1.

Tests carried out by the Applicant have shown that whey powder obtained with the aid of the method according to the invention is significantly less sticky than whey powder obtained in known ways. In particular, the end product is a non-caking product.

First of all, some background information will be given. In the prior art, the supersaturation and nucleation produced in the concentration and crystallization step results in a crystal slurry of crystals of α-lactose monohydrate in mother liquor. The drops which are formed in the (spray-)drying process then comprise one or more crystals of the α-lactose monohydrate, surrounded by mother liquor, although drops of mother liquor alone may also be present. During subsequent drying of the drops, a homogeneous mixture of amorphous lactose, lactose crystals, minerals and other constituents which are present in the mother liquor is formed from the mother liquor.

α-Lactose monohydrate is crystalline, contains approximately 5% of water of crystallization, is very stable and compared to non-crystalline (amorphous) lactose is much less sticky and non-hygroscopic.

Amorphous lactose is often present in lactose-containing powder as a vitreous material. At high temperatures, the vitreous state changes into a rubbery state, in which the amorphous lactose is highly thermoplastic.

Therefore, if drops are dried with mother liquor on the outside using a known method, each powder particle will comprise amorphous lactose, which is sticky in air, on the outer side. In other words, preliminary crystallization of the liquid alone, so that there is already a large amount of lactose in crystalline form, is insufficient to prevent the powder being sticky, since the stickiness properties are determined by the properties of the outermost part of the powder particles.

In practice, therefore, it is necessary to use a step to counteract the stickiness. This may, inter alia, be a further crystallization step, in which case sufficient free water must be present for amorphous lactose to be crystallized to form α-lactose monohydrate. The result is non-caking lactose powder, or more accurately: lactose-containing whey powder. It should be noted that this can only be achieved with sufficient free water, approx. 9% total moisture in the case of whey. Compare this with the known method described in WO 02/087348, which involves drying to a moisture content of approx. 5% in a single spray-drying step. This moisture content is too low for further crystallization of lactose.

The Applicant, without wishing to be tied to any specific explanation, assumes that the invention is based on the following effect. As a result of the heating to temperatures of at least 75°C in a concentrate of whey with a dry matter content of at least 45%, the thermoplasticity of the product is reduced very considerably in a first drying phase, i.e. for example in the spray dryer, as a result of greatly accelerated lactose crystallization occurring. This effect is even more pronounced at a temperature of at least 85°C. It should be noted that at these temperatures of at least 75°C milk proteins may denature in some of the products mentioned, in particular traditional whey. In practice, however, it has been found that these products are still usable. Firstly, the denaturation does not occur in other products, in particular whey permeates, on account of the substantial absence of proteins, and secondly if the denaturation does occur weighing up the advantages and disadvantages demonstrates that the accelerated and improved lactose crystallization process outweighs the denaturation of milk proteins.

It is assumed that minerals which are dissolved in the liquid delay the lactose crystallization process. In the concentration and drying step, the concentration of minerals increases further, resulting in slower crystallization in the known method. On account of the advantageous heating process according to the invention, a large proportion of the minerals is precipitated, in particular calcium phosphate and/or calcium citrate, and specifically the higher the dry matter content in the concentrate, the more these minerals are precipitated. The precipitation of a large proportion of the minerals therefore means that a large proportion of the crystallization-inhibiting substances disappears from the liquid. This allows crystallization to be greatly accelerated, even to such an extent that sufficient further crystallization of lactose may even occur during the (spray-)drying process, provided that there is sufficient free water available.

An additional considerable advantage of the heating step at a high dry matter content in accordance with the invention is that lactose crystallization can take place to an increased extent in accordance with heterogeneous crystallization. Lactose crystallization can generally take place in accordance with two principles, namely homogeneous crystallization and heterogeneous crystallization.

Homogeneous crystallization results from a supersaturated lactose concentration. This results in the formation of crystallization nuclei, which in turn form the basis for the formation of a lactose crystal.

Heterogeneous crystallization also takes place at a supersaturated concentration, but now crystal formation takes place at solid particles which are present in the slurry. These solid particles are formed in large numbers during the heating in accordance with the invention, with minerals being precipitated to form solid particles. The numbers of solid particles increase with heating to a higher dry matter content. In other words, the heterogeneous crystallization is greatly promoted by heating concentrates with a high dry matter content.

Another advantage of the heating step with a high dry matter content is that the thermoplasticity of the product during any subsequent drying thereof, for example in a fluidized bed, is reduced as a result. The result of this is that the risk of agglomeration and/or brown discoloration, resulting in a drop in quality of the product, is greatly reduced in this subsequent drying process.

The whey concentrate is preferably held at the abovementioned temperature for a time of between 0.25 minute and 5 minutes, depending, inter alia, on the dry matter content. It is important for this time to be well defined, for example by heating of the plug-flow type. Tests have shown that both an excessively short time and an excessively long time make the method less efficient. The reason for this has not been discovered to date. However, it is assumed that insufficient salts have precipitated if the time is too short.

As has already been noted above, the drying step takes place under conditions which are such that the free moisture content in the powder which is formed is sufficient to allow rapid further crystallization in the powder. This free moisture content is to some extent dependent on the composition of the product which is formed, and is advantageously between 8% and 13%. (Spray-)drying often involves drying to the lowest possible moisture content, which is often lower than the abovementioned content of 8-13%, but if the moisture content is too low, the mobility of the lactose molecules in the water in the lactose is so low that no further crystallization can occur, and consequently the lactose remains amorphous. Obviously, during (spray-)drying to a moisture content which is lower than 8-13%, there is a time at which the content is within the preferred range, but this time is too short to allow further crystallization to occur. If an even lower moisture content is ultimately desired, this has to be implemented in a separate step, i.e. following the spray-drying step.

The conditions under which drying has to be carried out in order to reach the abovementioned moisture content can be selected in an inter-dependent manner, which will not present any problems to the person skilled in the art, and if necessary these conditions can be determined by tests. To summarize, the quantity of drying gas, the contact time with the product to be dried and the temperature and moisture content of the drying gas have to be matched to the temperature, quantity and composition of the product which is to be dried, and also, of course, to the final moisture content which is desired.

As has been indicated above, the temperature and duration of the heating step can be selected within a defined preferred range. In particular, in the heating step the whey concentrate is held at a temperature of at least 75°C, in particular at least 85°C, for a time of between 0.5 and 4 minutes. Within this duration, a considerable proportion of the dissolved salts has already been precipitated and/or a suitable ratio between the quantity of precipitated salts and, depending on the thermal insulation, the energy consumption during the heating step is achieved.

In a preferred embodiment, in the heating step the whey concentrate is heated to a temperature of more than 90°C but less than 105°C. It has been found that the range from 75°C to 110°C, in particular above 90°C but below 105°C, is an attractive temperature range which provides considerable precipitation of salts without having an adverse effect on other properties of the whey concentrate or causing an excessively high energy consumption.

The time for which the whey concentrate is to be held at the desired temperature depends on this temperature. In a preferred embodiment, in the heating step the whey concentrate is held at a temperature of between 90 and 95°C for a time of between 0.5 and 3 minutes. Tests have shown that this combination of temperature and time provides excellent results, with rapid, virtually complete further crystallization of the lactose occurring. It has been found that 95-100% of the lactose was in the crystalline, non-caking form. Nevertheless, other combinations are also possible, depending, inter alia, on the composition of the product.

A dry matter content of at least 55% is advantageously created in the whey concentrate prior to step b), even more advantageously a dry matter content of between 60 and 75%. In general, a higher dry matter content is more favourable for the precipitation (removal from solution) of salts during the heating step, on account of the higher degree of supersaturation in the solution. In addition, it must also be borne in mind that the whey concentrate obtained can also expediently be dried and treated further. In practice, a dry matter content of 75% appears to be an attractive upper limit, although higher contents are not ruled out.

The creation of a dry matter content which is higher than the abovementioned 45% in a whey concentrate- can be brought about by using a concentrate of this nature as a starting product, by further concentrating the concentrate after the heating step or by a combination of the two. It is preferable for the heating step to be carried out on the whey concentrate with the highest dry matter content. In other words, the heating step is preferably carried out after the final concentration step. The heating step then takes place between the final concentration step and the crystallization step.

In a preferred embodiment of the invention, the whey concentrate is a concentrate of whey permeate. In other known methods, quite deliberate use is made of the denaturation of proteins for other whey products, whereas this is not possible in the case of whey permeate, on account of the almost complete absence of proteins. However, the method according to the invention is imminently suitable for whey permeates, as well as, of course, for whey and the like.

A preferred embodiment of the method according to the invention is **characterized in that** fine particles which are entrained with the drying gas are filtered with the aid of a filter. In this context, the term fine particles is to be understood as meaning the particles which are formed during the drying step, which particles are so lightweight that they are entrained with the drying gas. These particles have to be taken out of the discharged drying gas, not only in order to comply with requirements relating to the prevention of air pollution, but also because these fine particles can be used to give a product which can be reused.

Hitherto, this removal of fine particles has had to be carried out with the aid of cyclones, for example, often followed by a wet-scrubbing step with the aid of a wet scrubber in order to be able to comply with emissions requirements. This represents a complicated purification process with a wet waste stream. Although this form of purification is, of course, not ruled out, an advantage of the method according to the invention is that it is possible to use a filter to remove fine particles from the discharged drying-gas stream. In particular, what is known as a bag filter is intended to be used here.

One advantage of this type of filter is that it is possible to comply with emission requirements in a single step without having to use a wet waste stream or the like. In the methods which have hitherto been customary, the fine particles which formed during the drying process were also too sticky for it to be appropriate for this type of purification to be used, whereas according to the invention, on account of the accelerated crystallization in the drying process, it is possible to use a filter without excessive caking and the like of fine particles.

Steps c) and d) are preferably carried out by means of a spray-drying process, in which case the whey concentrate is atomized in a drying chamber and drying gas is passed through the atomized whey concentrate, with the spray-dried whey concentrate being collected as a powder and the drying gas being discharged via a drying-gas discharge. Although other methods, such as fluidized bed drying, are not ruled out, a spray-drying method is preferred on account, inter alia, of the flexibility of the process.

It is preferable for auxiliary gas to be fed to the discharged drying gas in a quantity and at a temperature and relative atmospheric humidity which are such that the combination of the discharged drying gas with entrained fine particles and the supplied auxiliary gas is outside the range in which stickiness occurs in the entrained fine particles. This stickiness is caused by an excessively high thermoplasticity and hygroscopicity of the particles, which are generally still moist and comprise amorphous lactose. In the stickiness range, fine particles stick to one another, to walls and the like, which can of course cause disadvantageous soiling.

The following statement is added as background information albeit that it is in part based on an interpretation, to which the Applicant does not wish to be tied.

Thermoplasticity in a product, including powder particles and fine particles, is determined not only by the degree of crystallization of the lactose, but also by the temperature and moisture content of the product. In a typical, though non-limiting drying process according to the invention, the moisture content of the particles is, for example, between 8 and 13%, in connection with the molecule mobility for crystallization. The relative atmospheric humidity is then generally 40 to 50%. At a typical, though once again non-limiting outlet air temperature of 60°C, the product is often too sticky under these conditions. Consequently, it will be possible for product decomposition to occur in the air outlets, in any standard cyclones and the like, which makes the production process uncontrollable and may even mean that the production process has to be stopped.

The stickiness range is in principle defined by the atmospheric humidity as a function of the temperature. As a guideline, it can be stated that in the case of whey permeate at 60°C, the relative atmospheric humidity of the discharged mixture should be less than 30%, i.e. fine whey permeate powder particles will not be sufficiently sticky to cause problems under these conditions. Obviously, the temperature, the quantity and the relative atmospheric humidity of the auxiliary gas to be supplied, and therefore of the mixture, are dependent on the temperature, the quantity and the relative atmospheric humidity of the discharged drying gas. For other products (whey and derivatives), the above guidelines will be different, for example will be higher in the case of sweet whey but lower in the case of mother liquors. However, it is easy for the person skilled in the art to select appropriate parameters for a situation which arises in practice. The above method allows the drawbacks to be overcome.

Although it is in principle possible, according to the above embodiment, to select both the quantity and the temperature and the relative atmospheric humidity of the auxiliary gas, it is preferable to set one or more of the latter two parameters, in order to limit the size of the drying installation.

Dry particles are advantageously fed to the discharged drying gas. These dry particles serve as a carrier for the still-moist fine particles in the discharged drying gas. The latter particles are then, as it were, shielded by a thin film of dry particles surrounding them. It is preferable for the dry particles used to be fine particles which have been dried to a suitable moisture content and then recycled to the drying gas discharge. These dry particles have, for example, a moisture content of approx. 5.5%, the lactose is virtually completely in crystal form, and therefore the particles have a very low thermoplasticity, and therefore a very low stickiness. If desired, it would also be possible to use products other than dry, crystallized lactose crystal particles, but these particles preferably have a very low thermoplasticity and inherent stickiness.

Although both the supply of auxiliary gas and the supply of dry particles have beneficial effects on the stickiness of the fine particles in the discharged drying gas, a combination of the two measures provides even better results. In this context, it is possible for auxiliary gas and dry particles to be supplied separately, which allows optimum control of the two auxiliary streams, but it is preferable for the dry particles and the auxiliary gas to be supplied in a combined stream, allowing simpler control and providing minimum possible disruption to the discharge of the drying gas.

The auxiliary gas and/or the dry particles are preferably supplied at an inlet, located in the vicinity of the drying chamber, of the drying gas discharge. This is intended to mean that the auxiliary gas and/or the dry particles, optionally in combination, are fed to the drying gas discharge via an inlet which is located in the vicinity of and advantageously as close as possible to the connection of the drying gas discharge to the drying chamber. More preferably, the auxiliary gas and/or the dry particles are at least partially supplied at the connection between the drying gas discharge and the drying chamber. In general, the closer to the drying chamber the auxiliary gas and/or fine particles are supplied, the more soiling problems caused by caking of fine particles which are still moist it is possible to prevent. Obviously, it is not necessary for the entire quantity of auxiliary gas and/or dry particles to be supplied to the said inlet all at once.

If desired, the method according to the invention can be combined with in principle any other processing step which is known from the prior art. In this context, consideration may be given to preceding steps, such as pasturization or heating to a low dry matter content, in order to precipitate salts in the meantime. This takes place, for example, at a dry matter content of towards 30%, in order to prevent any precipitation problems in apparatus in the further processing section (for example evaporators), but also at subsequent processing steps, such as further drying at, for example, a fluidized bed to reach a desired moisture content of, for example, 5 to 6%.

The invention also relates to a device for producing whey powder in accordance with the invention, comprising
- feed means for providing a whey concentrate with a dry matter content of at least 45%;
- crystallization means connected to the feed means for crystallizing lactose which is present in the whey concentrate; and
- a spray-drying device which is connected to the crystallization means and comprises a drying chamber having
   - a whey concentrate supply, comprising dispersing means for finely dispersing the whey concentrate,
   - a whey powder discharge,
   - drying means, comprising a drying gas supply and a drying gas discharge,
wherein the feed means comprise heating means which are designed to hold the whey concentrate at a temperature of at least 75°C, in particular at least 85°C, for between 0.25 and 5 minutes, and wherein the whey concentrate supply, the dispersing means and the drying means are designed to dry the whey concentrate to a powder with a moisture content of between 8% and 13%.

This device comprises heating means which are designed for the specific heating step in accordance with the invention and therefore provides the advantages described above. The heating means form part of the feed means and therefore provide a whey concentrate which has undergone the heat treatment step according to the invention before being released to the crystallization means, which release of the whey concentrate slurry together with the lactose, which has already partially crystallized, to the spray-drying device.

In a preferred embodiment, the drying gas discharge comprises a filter for filtering out fine particles entrained with the drying gas. This device will be able to make use of whey concentrate which has already been treated in accordance with the invention, and is special on account of the fact that it is now for the first time efficient to use a filter, in particular a bag filter, to filter fine particles out of drying gas. Hitherto, this was not possible, since the stickiness of the particles meant that these filters would become clogged far too quickly. Therefore, in the prior art it was necessary to use a cyclone or the like. In general, the advantages which have been described in connection with the method according to the invention also apply to the abovementioned devices according to the invention for carrying out this method. These advantages will therefore not be exhaustively repeated.

Obviously, the invention also encompasses a device with a combination of the above characteristics, i.e. the said heating means and the said filter.

The device according to the invention advantageously comprises a spray-drying device, which comprises a drying chamber having
- a whey concentrate supply, comprising dispersing means for finely dispersing the whey concentrate,
- a whey powder discharge,
- a drying gas supply,
- a drying gas discharge.

This preferred device is a spray-drying device which, for example, is very flexible in terms of the treatment of product which is to be dried and has been dried and in which it is possible to make use of a very wide range of additional techniques. In fact, the drying chamber of the spray-drying device in this case comprises a number of components of the general device according to the invention. This applies in particular to the dispersing means for whey concentrate and the drying gas supply and discharge.

The drying gas discharge of the device advantageously comprises an auxiliary gas supply. This can be used to suitably supply auxiliary gas to the drying gas discharge. The auxiliary gas is, for example, filtered air at an appropriate temperature, in an appropriate quantity and with an appropriate atmospheric humidity. By way of example, use is made of drying gas which has passed through the filter. This results in principle in a closed system in which treated drying gas is reused. Emission requirements then present scarcely any problem for a system of this nature. This gas will often have to be dried before being reused. The associated costs mean that a closed system of this nature will mainly be used for relatively expensive products and for expensive or hazardous drying gases. In practice, however, treated but unrecirculated air, such as conditioned outside air, will often be used.

The drying gas discharge preferably comprises an auxiliary supply of dry particles. This auxiliary supply can be used to feed dry particles to the auxiliary gas, in the case of a combined supply, or to the discharged drying gas, in order to enable the particles to attach themselves to any moist, still sticky fine particles which are still present.

In an expedient embodiment of the device according to the invention, the auxiliary gas supply and/or the auxiliary supply for dry particles are connected to an inlet, located in the vicinity of the drying chamber, of the drying gas discharge. As has already been described above, there are advantages if at least one of the said auxiliary supplies is located close to and preferably at the connection between the drying chamber and the drying gas discharge. This allows the auxiliary substance supplied, namely auxiliary gas and/or dry particles, to start their stickiness-reducing action as early as possible.

Obviously, the device according to the invention may be provided with control means for controlling all kinds of parameters of the drying process, for example the quantity and where necessary temperature and/or relative humidity of supplied whey concentrate, drying gas, auxiliary gas and/or dry particles. These means are fundamentally known from the prior art and will not be dealt with in more detail in the present context.

The invention will be explained in more detail below on the basis of a nonlimiting preferred embodiment, with reference to the drawing, in which:
- Figure 1 shows a block diagram of a method according to the invention,
- Figure 2 diagrammatically depicts a cross-sectional view through a device according to the invention, and
- Figure 3 shows a graph relating to a pressure drop in an example method.

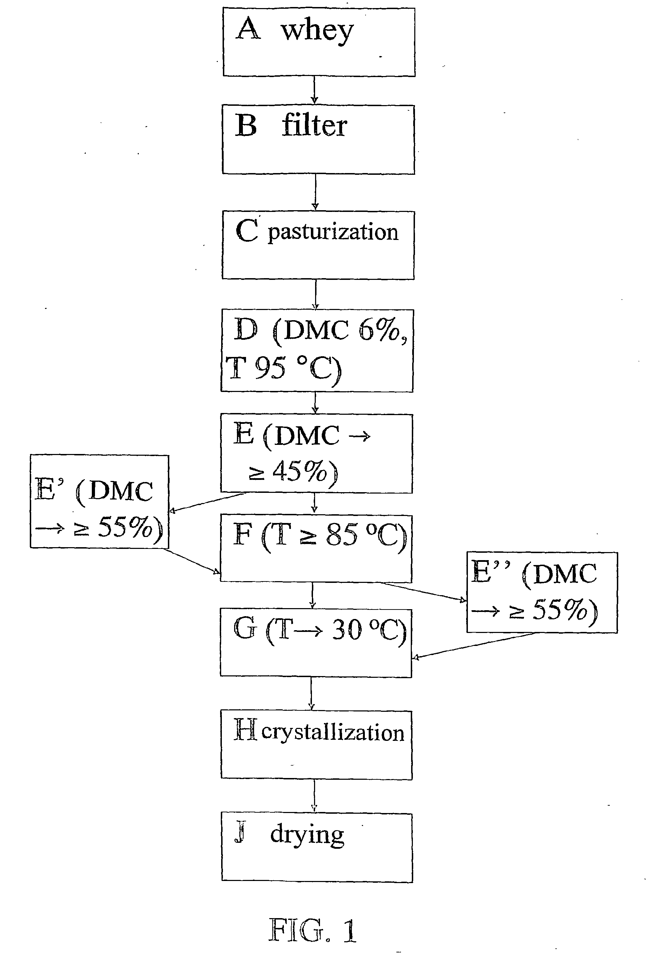

Figure 1 shows a block diagram of a method according to the invention.

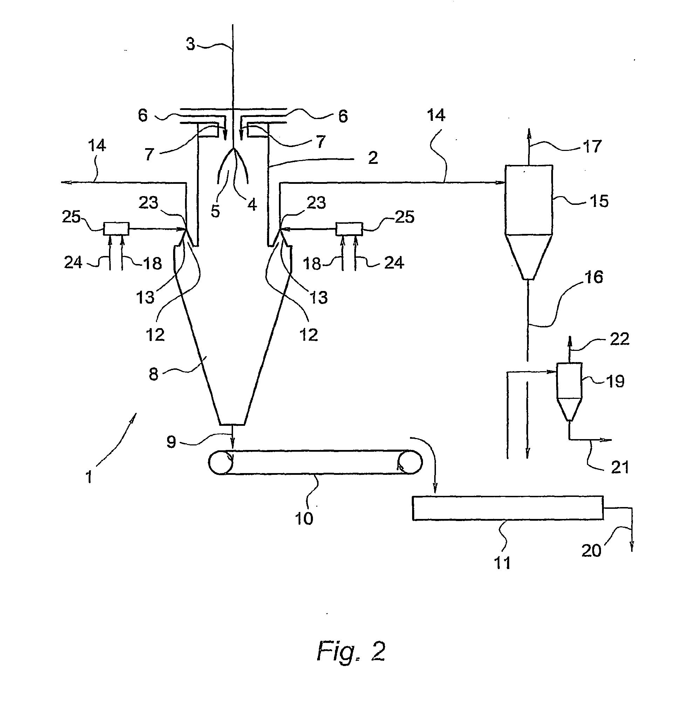

The steps bracketed by I belong to a pretreatment section, and the steps bracketed by II belong to a main treatment section. These steps will in each case only be described briefly, with the exception of the drying step at II, which will be explained extensively with reference to Fig. 2.

At the top of Fig. 1, in step A, whey is provided, which is a by-product of, for example, cheese making. This whey contains, inter alia, milk fat, protein (in particular whey protein), lactose, salts and minerals. Next, in step B, a membrane filtration step is carried out for removing milk fat and milk proteins from the whey. The dry matter content (DMC) is now approx. 6%.

This is followed, in step C, by a pasturization step at a temperature and with a duration as laid down in statutory or other regulations. In combination with this step or separately from it, a preheating step D is carried out on the liquid, which still has a low viscosity. This is carried out at temperatures between approximately 70 and 95 or even 100°C and for a duration of at most 5 minutes. This step is carried out primarily in order to precipitate salts which are present in the liquid. Although not all the salts can be removed, this step offers advantages since it counteracts problems relating to precipitation of salts in subsequent concentration steps, for example in evaporators. At this point, it should be expressly pointed out that this heating step, although carried out at the same temperature and for the same durations, does not have the same effect as the method according to the invention. Cf. in this respect Example 2 below.

Then, in step E, the liquid is inspissated, for example in an evaporator, to a dry matter content of at least 45%. This typically takes place at temperatures between 60 and 70°C.

There are then two options. Next, either the liquid, if desired, is concentrated further to the desired higher end value of, for example, 60-70% before the heating step F is carried out on the whey concentrate (left-hand branch in the diagram, step E'), or this heating step F is carried out first of all, followed by concentration (right-hand branch in the diagram, step E"). Since the concentration is in fact often carried out in steps, this is not inherently a problem. It should be noted that the heating step F provides better results at higher concentrations, i.e. higher dry matter contents.

During the heating step F, the concentrate, i.e. with a dry matter content of at least 45%, preferably higher, for example 60%, is heated to, for example, above 85°C, for example to 90°C. This step preferably lasts between 0.25 and 5 minutes, although shorter or longer times, for example between 5 and 900 seconds, may be more advantageous in other situations. Under these conditions, significantly more salt will still precipitate out of the liquid, which offers the advantages mentioned in the introduction when the product is being dried to powder. For example, at a dry matter content of 55%, the degree of inspissation of the salts is 11, but at a dry matter content of 30% is only 6.

After, as has already been mentioned above, an additional concentration step E" has been carried out if required, a rapid cooling step G is then carried out. In this step, the concentrate is cooled very quickly, within a few seconds, to a temperature which is suitable for crystallization of lactose, for example 30°C.

Crystallization step H involves crystallizing the lactose which is now present in a supersaturated concentration. This typically takes place over the course of 4 to 5 hours, but obviously in sufficient time to eliminate the supersaturated concentration of the lactose. In this step, some 80 to 85% of all the lactose which is present will crystallize out. In the residual liquid or "mother liquor" which is still present, typically around 60% of the dry matter is still formed by lactose.

The slurry comprising lactose crystals in mother liquor is now ready for the drying step J. This step, with its numerous options with regard to treatment of the fine particles which are formed therein, will be explained in more detail in Fig. 2.

In Fig. 2, 1 diagrammatically depicts a cross-sectional view, not to scale, of a device according to the invention, in this case a spray-drying device.

2 denotes a drying chamber, 3 denotes a whey concentrate feed line. Atomization means 4 form a whey mist 5 which is broken up by drying gas streams 7 created with the aid of drying gas feed lines 6.

Whey powder 8 which is formed ultimately drops down to product discharge 9, where it drops onto crystallization belt 10 and then passes via fluidized bed 11 to end product discharge 20.

Used drying gas is discharged, together with entrained fine particles 12, to drying gas filter 15 via a drying gas discharge inlet 13 and a drying gas line 14. An auxiliary gas feed line 24 and a drying particle feed line 18 are arranged at the drying gas discharge inlet 13, at auxiliary feed point 23 via auxiliary substance mixer 25.

Drying gas filter 15 filters fine particles out of the drying gas and discharges them via fine particle discharge 16 to fluidized bed 11. The purified drying gas leaves the device 1 via drying gas discharge line 17.

Fluidizing gas from fluidized bed 11 is purified in filter 19. Product (fine particles and the like) from this filter leaves the filter via filter discharge 21, while the purified fluidizing gas leaves the filter via gas discharge 22.

In the drying chamber 2, whey concentrate is sprayed to form a mist 5 of small droplets with the aid of atomization means 4. The mist 5 is broken up by drying gas streams 7 from drying gas feed lines 6. The drying gas has previously been brought to a desired temperature as required, for example 150°C to 170°C. Moisture may optionally have been removed from the drying gas beforehand in order to produce an even better drying action. The dying gas is fed to the drying chamber 2 in a suitable quantity.

During the drying process, a powder 8 of particles of all kinds of dimensions, including fine particles 12 which are so small and lightweight that they are entrained by the drying gas stream, is formed in the mist 5 during the drying process.

Some of the powder 8 which is formed is first of all deposited on a wall of the drying chamber 2, where it will already be possible for very considerable further crystallization of lactose in the product to occur. The typical moisture content here is around 10%. Over the course of time, the product drops downwards and can be discharged from the drying chamber 2 via a product discharge 9, for example onto an optional crystallization belt 10. If desired, the further crystallization can be completed on this crystallization belt, within a residence time of, for example, 5 to 20 minutes.

From the crystallization belt 10, the product drops into a fluidized bed 11 for further drying to a desired final moisture content of approximately 5 to 6% and further cooling to an appropriate temperature of, for example, 35°C. It should be noted that the crystallization belt is optional if the stickiness, which has already been reduced by the method according to the invention, needs to be lowered still further, while the fluidized bed is not in this case used to reduce stickiness (although obviously it could be), but rather to obtain a specific desired moisture content in the end product.

The outlet air from the fluidized bed 11 is purified in filter 19. The fine particles which are trapped in the filter are discharged via fine particle discharge 16 and if desired transferred to the fluidized bed 11 for further drying and cooling.

Auxiliary gas 24 is a gas at a defined expedient temperature and preferably a low absolute moisture content, preferably less than 10 grams of water per kg of dry gas. This auxiliary gas is mixed with discharged drying gas from the drying chamber 2, preferably at point 23 in the drying gas discharge inlet 13. The temperature, quantity and moisture content of the auxiliary gas are selected in such a manner that after mixing with the drying gas which has been discharged from the drying chamber, the relative moisture content of the mixture is no higher than, for example, 30%, or another content which is for the product produced at that time and the temperature in use. The temperature of the air mixture is preferably between 60 and 65°C, although this temperature may be selected to be lower and/or higher.

Preferably, additional dry particles are advantageously introduced in the auxiliary substance mixer 25. These particles may originate from the powder stream which leaves the fluidized bed 11 at discharge 20 or, for example, from filter discharge 21. These supplied particles, which advantageously have a moisture content of approximately 5 to 6% or even lower, in which lactose, if present, has preferably been crystallized out to the maximum extent and which have a very low stickiness, are used as a carrier material for any particles which are still moist and generally sticky in the discharged drying gas from the drying chamber 2. Any such sticky (fine) particles which may be present are in this way, as it were, shielded as a result of non-sticky supplied particles sticking to them. As a result, the stickiness of the particles as a whole, i.e. in fact a type of agglomerate of fine particles which are still slightly sticky surrounded by non-sticky dry particles, decreases to such an extent that a resistance in the downstream gas passages and filter means, for example a bag filter, will build up much more slowly.

In this example, the device 1 illustrated is a spray-drying device. Other types of devices, such as fluidized beds or spin flash dryers, are in principle also possible devices in accordance with the invention; the person skilled in the art will easily be able to make the appropriate modifications.

The device shown can be used to produce whey powder from whey concentrate, as described in the introduction. Although the components for carrying out the method according to the invention are not shown in Figure 2, they can in principle, of course, form part of the device. Since the means in question, namely heating means and/or concentration means, quick-cooling means, crystallization means, etc., are themselves already known in the prior art, however, no further attention is paid to these means at this point. What is obviously important is the use of these means in the inventive manner in accordance with the invention.

### Example

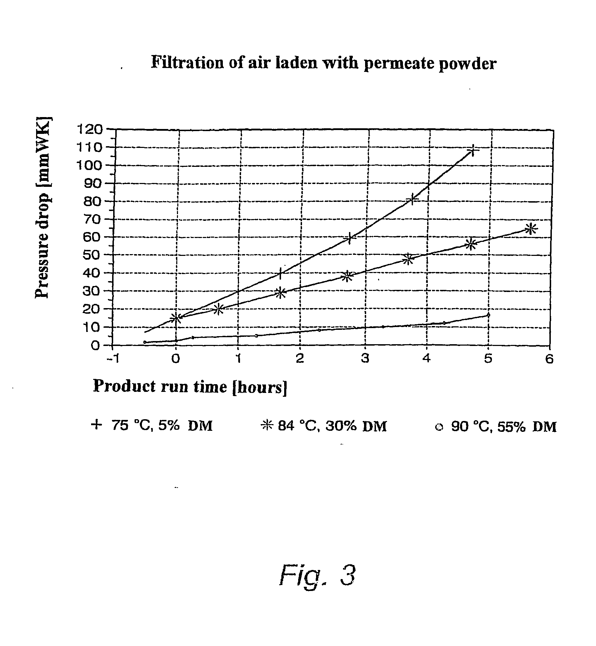

The example outlined below illustrates, with reference to Figure 3 and the graph which it shows, the effect of the invention on the spray-drying of a number of permeates. The graph represents the speed at which the pressure drop built up in an installed filter.

Whey permeate derived from Gouda cheese whey was respectively heated to:
(1) approx. 75°C, with a dry matter content of approx. 5% during heating;
(2) 84°C, with a dry matter content of approx. 30% during heating; and
(3) 90°C, with a dry matter content of approx. 55°C during heating.

Therefore, regime (3) was in accordance with the invention.

All these permeates had undergone pre-crystallization prior to the spray drying. In all three cases:
- the degree of crystallization for lactose was approx. 82-85%;
- the dry matter content in the concentrate which was ultimately fed to the spray dryer was approximately 58-61%;
- the inlet and outlet temperatures of the drying gas were 160°C and approximately 56-57°C, respectively;
- auxiliary gas was introduced at the outlet ports of the spray dryer, in such a manner that the relative humidity of the mixing air was between 26 and 28% and the temperature of the mixture was between 61 and 63°C;
- additional dry powder originating from the product outlet of the fluidized bed was introduced together with the dry auxiliary gas;
- the outlet air from the dryer with the auxiliary gas in it was mixed, and together with dry product which was also present therein and was derived from the fluidized bed and fine particles present in the primary discharged drying gas, was passed through a cloth filter; and
- the quantity of gas mixture per square metre of filter surface area (air to cloth ratio) was the same.

The measure used for the sticking of the powder was the rate at which the pressure drop across the filter cloths increased. As the stickiness of the powder passing through the filter increases, more powder will be deposited on these filter cloths and stick to them. Consequently, the pressure drop across these filter cloths will also increase more quickly.

The graph shown in Figure 3 illustrates how these three permeates, i.e. with their different heating regimes, behave in the filter cloths. The pressure curve differs significantly, and it is clearly apparent that heating at 90°C with a high dry matter content provides by far the lowest pressure drop as a function of time.

A low pressure drop over the course of time of this nature offers the advantage that the service life of the filter can be greatly lengthened, and consequently so can that of the device as a whole. Also, the production conditions will be kept constant for a longer time, and energy is saved.

One aspect which has not yet been dealt with specifically above but which can in fact play a role in certain devices is that the drying gas streams used may in principle also form a closed system. Drying gas is supplied and, after it has passed through the drying chamber or the fluidized bed, is discharged again, together with the product and/or fine particles. Drying gas from another part of the circuit can in the meantime, for example, be purified so that fine particles are removed, and may if desired be dried and/or brought to a desired higher or lower temperature, after which it can be fed to the drying gas discharge from the drying chamber. At this point, it should be noted that in practice this will not make much difference, especially since the drying gas can simply be purified. However, this may offer advantages, for example if exotic drying gases are used.

The device could also be used in other production processes, with in each case one or more of the following measures advantageously being used: 1) supplying additional, optionally conditioned drying gas to the discharged drying gas, 2) supplying additional particles, either dry particles from the production process itself or additional "foreign" particles, to the discharged drying gas, and 3) carrying out measure 1) and/or 2) at the location where the drying gas leaves the drying chamber of a drying device, and/or as close as possible to this location. A greater or lesser benefit can be derived from this depending on the substance which is to be dried. In particular, it will be possible to benefit with any other substance which is sticky as a result of atmospheric humidity or moisture content.

## Claims

1. Method for producing whey powder, comprising the steps of:
a) providing a whey concentrate with a dry matter content of at least 45%,
b) crystallizing lactose which is present in the whey concentrate,
c) finely dispersing the whey concentrate, and
d) drying the finely dispersed whey concentrate to form a whey powder with sufficient free moisture for recrystallization, with the aid of a drying gas,
wherein a heating step, in which the whey concentrate is held at a temperature of at least 75°C, in particular at least 85°C, for a time of between 0..25 minute and 5 minutes, is carried out between step a) and step b).

2. Method according to claim 1, **characterized in that** at the end of the spray-drying step, the free moisture content is between 8% and 13%.

3. Method according to claim 1 or 2, **characterized in that** in the heating step the whey concentrate is held at a temperature of at least 75°C, in particular at least 85°C, for a time of between 0.5 and 4 minutes.

4. Method according to one of claims 1-2, **characterized in that** in the heating step the whey concentrate is heated to a temperature of more than 90°C, but less than 110°C.

5. Method according to one of the preceding claims, **characterized in that** in the heating step the whey concentrate is held at a temperature of between 90 and 95°C for a time of between 0.5 and 3 minutes.

6. Method according to one of the preceding claims, **characterized in that** prior to step b) a dry matter content of at least 55% is created in the whey concentrate.

7. Method according to one of the preceding claims, **characterized in that** the whey concentrate is a concentrate of whey permeate.

8. Method according to one of the preceding claims, **characterized in that** fine particles which originate from the drying step and are entrained with the drying gas are filtered with the aid of a filter.

9. Method according to one of the preceding claims, **characterized in that** steps c) and d) are carried out by means of a spray-drying process, in which the whey concentrate is atomized in a drying chamber and drying gas is passed through the atomized whey concentrate, with the spray-dried whey concentrate being collected as a powder and the drying gas being discharged via a drying gas outlet.

10. Method according to claim 8 or 9, **characterized in that** auxiliary gas is fed to the discharged drying gas in a quantity and at a temperature and relative atmospheric humidity which are such that the combination of the discharged drying gas with entrained fine particles and the supplied auxiliary gas is outside the range in which the entrained fine particles are sticky.

11. Method according to one of claims 8-10, **characterized in that** dry particles are fed to the discharged drying gas.

12. Method according to claim 9 or 10, **characterized in that** the auxiliary gas and/or the dry particles are fed to an inlet, located in the vicinity of a drying chamber, of the drying gas discharge.

13. Device for producing whey powder as set forth in one of claims 1-11, comprising
- feed means for providing a whey concentrate with a dry matter content of at least 45%;
- crystallization means connected to the feed means for crystallizing lactose which is present in the whey concentrate; and
- a spray-drying device which is connected to the crystallization means and comprises a drying chamber having
- a whey concentrate supply, comprising dispersing means for finely dispersing the whey concentrate,
- a whey powder discharge,
- drying means, comprising a drying gas supply and a drying gas discharge,
wherein the feed means comprise heating means which are designed to hold the whey concentrate at a temperature of at least 75°C, in particular at least 85°C, for between 0.25 and 5 minutes, and wherein the whey concentrate supply, the dispersing means and the drying means are designed to dry the whey concentrate to a powder with a moisture content of between 8% and 13%.

14. Device for producing whey powder according to claim 13, **characterized in that** the drying gas discharge comprises a filter for filtering out fine particles which are entrained with the drying gas.

15. Device according to one of claims 13-14, **characterized in that** the drying gas discharge comprises an auxiliary gas supply.

16. Device according to one of clams 13-15, **characterized in that** the drying gas discharge comprises an auxiliary supply of dry particles.

17. Device according to claim 15 or 16, **characterized in that** the auxiliary gas supply and/or the auxiliary supply for dry particles are connected to an inlet, located at the drying chamber, of the drying gas discharge.

## Patentansprüche

1. Verfahren zur Herstellung von Molkenpulver, umfassend die Schritte:
a) des Bereitstellens eines Molkenkonzentrats mit einem Trockensubstanzgehalt von mindestens 45 %,
b) des Kristallisierens der Lactose, die in dem Molkenkonzentrat vorliegt,
c) des Feindispergierens des Molkenkonzentrats und
d) des Trocknens des fein dispergierten Molkenkonzentrats unter Bildung eines Molkenpulvers mit ausreichend freier Feuchtigkeit für die Rekristallisation mit Hilfe eines Trocknungsgases,
wobei zwischen Schritt a) und Schritt b) ein Erwärmungsschritt durchgeführt wird, in dem das Molkenkonzentrat für einen Zeitraum zwischen 0,25 Minuten und 5 Minuten bei einer Temperatur von mindestens 75 °C, bevorzugt mindestens 85 °C, gehalten wird.

2. Verfahren nach Anspruch 1, **dadurch gekennzeichnet, dass** am Ende des Sprühtrocknungsschrittes der Gehalt an freier Feuchtigkeit zwischen 8 % und 13 % liegt.

3. Verfahren nach Anspruch 1 oder 2, **dadurch gekennzeichnet, dass** in dem Erwärmungsschritt das Molkenkonzentrat für einen Zeitraum zwischen 0,5 und 4 Minuten bei einer Temperatur von mindestens 75 °C, bevorzugt mindestens 85 °C, gehalten wird.

4. Verfahren nach einem der Ansprüche 1 - 2, **dadurch gekennzeichnet, dass** in dem Erwärmungsschritt das Molkenkonzentrat auf eine Temperatur von mehr als 90 °C, aber weniger als 110 °C, erwärmt wird.

5. Verfahren nach einem der vorstehenden Ansprüche, **dadurch gekennzeichnet, dass** in dem Erwärmungsschritt das Molkenkonzentrat für einen Zeitraum zwischen 0,5 und 3 Minuten bei einer Temperatur zwischen 90 und 95 °C gehalten wird.

6. Verfahren nach einem der vorstehenden Ansprüche, **dadurch gekennzeichnet, dass** in dem Molkenkonzentrat vor Schritt b) ein Trockensubstanzgehalt von mindestens 55 % erzeugt wird.

7. Verfahren nach einem der vorstehenden Ansprüche, **dadurch gekennzeichnet, dass** das Molkenkonzentrat ein Konzentrat aus Molkenpermeat ist.

8. Verfahren nach einem der vorstehenden Ansprüche, **dadurch gekennzeichnet, dass** Feinteilchen, die aus dem Trocknungsschritt stammen und mit dem Trocknungsgas mitgeführt werden, mit Hilfe eines Filters filtriert werden.

9. Verfahren nach einem der vorstehenden Ansprüche, **dadurch gekennzeichnet, dass** die Schritte c) und d) mittels eines Sprühtrocknungsprozesses durchgeführt werden, in dem das Molkenkonzentrat in einer Trockenkammer zerstäubt wird und Trocknungsgas durch das zerstäubte Molkenkonzentrat geleitet wird, wobei das sprühgetrocknete Molkenkonzentrat als ein Pulver gesammelt und das Trocknungsgas durch einen Trocknungsgasauslass entladen wird.

10. Verfahren nach Anspruch 8 oder 9, **dadurch gekennzeichnet, dass** dem entladenen Trocknungsgas Zusatzgas in einer Menge und bei einer Temperatur und relativer atmosphärischer Feuchtigkeit derart zugeführt wird, dass die Vereinigung des entladenen Trocknungsgases mit mitgeführten Feinteilchen und des zugeführten Zusatzgases außerhalb des Bereiches liegt, in dem die mitgeführten Feinteilchen klebrig sind.

11. Verfahren nach einem der Ansprüche 8 bis 10, **dadurch gekennzeichnet, dass** dem entladenen Trocknungsgas Trockenteilchen zugeführt werden.

12. Verfahren nach Anspruch 9 oder 10, **dadurch gekennzeichnet, dass** das Zusatzgas und/oder die Trockenteilchen einem Einlass der Trocknungsgasentladung zugeführt werden, der sich in der Umgebung einer Trockenkammer befindet.

13. Vorrichtung zur Herstellung von Molkenpulver nach einem der Ansprüche 1 bis 11, umfassend
- Zuführmittel zur Bereitstellung eines Molkenkonzentrats mit einem Trockensubstanzgehalt von mindestens 45 %;
- Kristallisationsmittel, die mit den Zuführmitteln verbunden sind, zum Kristallisieren der in dem Molkenkonzentrat vorhandenen Lactose und
- eine Sprühtrocknungsvorrichtung, die mit den Kristallisationsmitteln verbunden ist, und eine Trocknungskammer mit
- einer Molkenkonzentratspeisung, umfassend Dispergiermittel zum Feindispergieren des Molkenkonzentrats,
- einem Molkenpulverablass,
- Trocknungsmitteln, umfassend eine Trocknungsgasspeisung und einen Trocknungsgasablass,
wobei die Speisungsmittel Erwärmungsmittel umfassen, die so konstruiert sind, dass sie das Molkenkonzentrat zwischen 0,25 und 5 Minuten bei einer Temperatur von mindestens 75 °C, bevorzugt mindestens 85 °C, halten, und wobei die Molkenkonzentratspeisung, die Dispergiermittel und die Trocknungsmittel so konstruiert sind, dass sie das Molkenkonzentrat zu einem Pulver mit einem Feuchtigkeitsgehalt zwischen 8 % und 13 % trocknen.

14. Vorrichtung zur Herstellung von Molkenpulver nach Anspruch 13, **dadurch gekennzeichnet, dass** der Trocknungsgasablass einen Filter zum Abfiltern der Feinteilchen, die mit dem Trocknungsgas mitgeführt werden, umfasst.

15. Vorrichtung nach einem der Ansprüche 13 bis 14, **dadurch gekennzeichnet, dass** der Trocknungsgasablass eine Zusatzgasspeisung umfasst.

16. Vorrichtung nach einem der Ansprüche 12 bis 15, **dadurch gekennzeichnet, dass** der Trocknungsgasablass eine Zusatzspeisung für Trockenteilchen umfasst.

17. Vorrichtung nach Anspruch 15 oder 16, **dadurch gekennzeichnet, dass** die Zusatzgasspeisung und/oder die Zusatzspeisung für Trockenteilchen mit einem Einlass für den Trocknungsgasablass verbunden ist, der sich an der Trockenkammer befindet.

## Revendications

1. Procédé de production de poudre de lactosérum, comprenant les étapes consistant à :
a) fournir un concentré de lactosérum ayant une teneur en matière sèche d'au moins 45 %,
b) cristalliser le lactose qui est présent dans le concentré de lactosérum,
c) disperser finement le concentré de lactosérum, et
d) sécher le concentré de lactosérum dispersé finement pour former une poudre de lactosérum avec une humidité libre suffisante pour recristallisation, avec l'aide d'un gaz de séchage,
dans lequel une étape de chauffage, dans laquelle le concentré de lactosérum est maintenu à une température d'au moins 75 °C, en particulier, d'au moins 85 °C, pendant une période comprise entre 0,25 minute et 5 minutes, est effectuée entre l'étape a) et l'étape b).

2. Procédé selon la revendication 1, **caractérisé en ce qu'**à la fin de l'étape de séchage par pulvérisation, la teneur en humidité libre est comprise entre 8 % et 13 %.

3. Procédé selon la revendication 1 ou 2, **caractérisé en ce qu'**au cours de l'étape de chauffage, le concentré de lactosérum est maintenu à une température d'au moins 75 °C, en particulier, d'au moins 85 °C, pendant une période comprise entre 0,5 et 4 minutes.

4. Procédé selon une des revendications 1 et 2, **caractérisé en ce qu'**au cours de l'étape de chauffage, le concentré de lactosérum est chauffé à une température supérieure à 90 °C, mais inférieure à 110 °C.

5. Procédé selon une des revendications précédentes, **caractérisé en ce qu'**au cours de l'étape de chauffage, le concentré de lactosérum est maintenu à une température comprise entre 90 et 95 °C pendant une période entre 0,5 et 3 minutes.

6. Procédé selon une des revendications précédentes, **caractérisé en ce qu'**avant l'étape b), une teneur en matière sèche d'au moins 55 % est créée dans le concentré de lactosérum.

7. Procédé selon une des revendications précédentes, **caractérisé en ce que** le concentré de lactosérum est un concentré de perméat de lactosérum.

8. Procédé selon une des revendications précédentes, **caractérisé en ce que** les fines particules qui proviennent de l'étape de séchage et sont entraînées avec le gaz de séchage sont filtrées à l'aide d'un filtre.

9. Procédé selon une des revendications précédentes, **caractérisé en ce que** les étapes c) et d) sont effectuées au moyen d'un processus de séchage par pulvérisation, dans lequel le concentré de lactosérum est atomisé dans une chambre de séchage et le gaz de séchage est passé à travers le concentré de lactosérum atomisé, le concentré de lactosérum séché par pulvérisation étant collecté comme une poudre et le gaz de séchage étant évacué via un orifice de sortie de gaz de séchage.

10. Procédé selon la revendication 8 ou 9, **caractérisé en ce qu'**un gaz auxiliaire est fourni au gaz de séchage évacué dans une quantité et à une température et une humidité atmosphérique relative qui sont telles que la combinaison du gaz de séchage évacué avec les fines particules entraînées et du gaz auxiliaire fourni est en dehors de la plage dans laquelle les fines particules entraînées sont collantes.

11. Procédé selon une des revendications 8 à 10, **caractérisé en ce que** des particules sèches sont fournies au gaz de séchage évacué.

12. Procédé selon la revendication 9 ou 10, **caractérisé en ce que** le gaz auxiliaire et/ou les particules sèches sont fournis à une entrée, se trouvant à proximité d'une chambre de séchage, de l'évacuation de gaz de séchage.

13. Dispositif de production de poudre de lactosérum selon une des revendications 1 à 11, comprenant
- des moyens d'alimentation destinés à fournir un concentré de lactosérum ayant une teneur en matière sèche d'au moins 45 % ;
- des moyens de cristallisation reliés aux moyens d'alimentation destinés à cristalliser le lactose qui est présent dans le concentré de lactosérum ; et
- un dispositif de séchage par pulvérisation qui est relié aux moyens de cristallisation et comprend une chambre de séchage ayant
-- une source d'alimentation en concentré de lactosérum, comprenant des moyens de dispersion destinés à disperser finement le concentré de lactosérum,
-- une évacuation de poudre de lactosérum,
-- des moyens de séchage, comprenant une source d'alimentation en gaz de séchage et une évacuation de gaz de séchage,
dans lequel les moyens d'alimentation comprennent des moyens de chauffage qui sont conçus pour maintenir le concentré de lactosérum à une température d'au moins 75 °C, en particulier, d'au moins 85 °C, pendant une période comprise entre 0,25 et 5 minutes, et dans lequel la source d'alimentation en concentré de lactosérum, les moyens de dispersion et les moyens de séchage sont conçus pour sécher le concentré de lactosérum jusqu'à obtenir une poudre ayant une teneur en humidité comprise entre 8 % et 13 %.

14. Dispositif de production de poudre de lactosérum selon la revendication 13, **caractérisé en ce que** l'évacuation du gaz de séchage comprend un filtre destiné à filtrer les fines particules qui sont entraînées avec le gaz de séchage.

15. Dispositif selon une des revendications 13 et 14, **caractérisé en ce que** l'évacuation de gaz de séchage comprend une source d'alimentation en gaz auxiliaire.

16. Dispositif selon une des revendications 13 à 15, **caractérisé en ce que** l'évacuation de gaz de séchage comprend une source d'alimentation auxiliaire en particules sèches.

17. Dispositif selon la revendication 15 ou 16, **caractérisé en ce que** la source d'alimentation en gaz auxiliaire et/ou la source d'alimentation auxiliaire en particules sèches sont reliées à une entrée, se trouvant au niveau de la chambre de séchage, de l'évacuation de gaz de séchage.
